# EUROPEAN PATENT APPLICATION

(11) **EP 4 487 690 A1**
(43) Date of publication of application: **08.01.2025**
(21) Application number: 23183130.6
(22) Date of filing: 03.07.2023
(51) Int. Cl.: A23F 3/14, A23F 5/36

(54) **VITAMIN C FORTIFIED BEVERAGE COMPOSITION**

(71) Applicant: Ekaterra Research and Development UK Limited, Sharnbrook, Bedfordshire MK44 1LQ (GB)
(72) Inventor: The designation of the inventor has not yet been filed
(74) Representative: Mewburn Ellis LLP

(57) **Abstract**

The present invention provides a beverage composition comprising;
a) vitamin C;
b) a first polysaccharide comprising maltodextrin;
c) a second polysaccharide comprising gum arabic and/or xanthan gum; and,
d) a beverage product,
wherein the mass ratio of first polysaccharide to second polysaccharide is between 2:1 to 1:2.

The present invention also provides a process for preparing a beverage composition.

## Description

### Field of the Invention

The present invention relates to a beverage composition. In particular, the present invention relates to a vitamin C fortified beverage composition.

### Background

Staying hydrated is believed to bring about many health benefits to both the body and mind. Thus, it is often said that many non-alcoholic beverages are believed to refresh the mind. There are many non-alcoholic beverages available in the market for consumption. Tea and coffee are the most popular out of these.

Polyphenols that are present in tea are also considered to be good for human health. There are varieties of tea available in the market, e.g. black tea, green tea, oolong tea, white tea, *etc.* Black tea is generally prepared by a process which includes the steps of withering, macerating, fermenting, and firing/drying. On the other hand, green tea manufacturing process does not include the step of fermentation. Therefore, the characteristic profile of green tea is different from that of black tea.

Traditionally, tea referred to those products which were obtained from the tea plant *Camellia Sinensis.* However, recently, the definition of tea is now generally accepted to also include any form of herbal infusion. Thus, commonly, these herbal infusions are now referred to as herbal 'teas'.

Herbal teas or herbal infusions are also becoming increasingly popular because of the various health benefits provided by the different herbs. That is, herbal teas are generally rich in antioxidants, vitamins and essential nutrients, compounds which are strongly associated with health benefits, such as relieving stress, boosting immunity, reducing pain and aiding digesting. Thus, herbal teas are seen as a convenient way of delivering these essential nutrients and elements to an individual.

Most of the people in Western and Asian countries drink at least one from of tea or coffee at least once a day, or even more. Therefore, tea and coffee could be one of the ways of delivering nutrients and essentials elements.

Vitamin C is one of the essential nutrients required for growth, development, and repair of body tissue. Vitamin C is also an antioxidant as well as being an important nutrient for boosting immunity. Fortifying beverages, such as tea, with vitamin C is an affordable option for delivering vitamin C to consumers. However, to deliver vitamin C through tea, currently the beverages industry uses physical mixing of vitamin C granules (pure or encapsulated made from non-tea material) along with tea granules. There are numerous challenges associated with this current method of vitamin C fortification, such as poor tea leaf appearance, low shelf-life stability & inconsistent or poor delivery of vitamin C into the end cup.

The present invention is concerned with addressing one or more of the above problems by providing a vitamin C fortified beverage composition wherein vitamin C is coated onto a beverage product (e.g. tea leaf product) using a certain amount and type of polysaccharide binder.

Thus, the present inventors have discovered that by using a specific type and ratio of polysaccharide binder it is beneficially possible to fortify beverage products with vitamin C and achieve an excellent visual appearance (e.g. colour) of the beverage product, excellent delivery of vitamin C to the end cup and prolonged stability of the vitamin C coated beverage product; thus addressing the aforementioned problems in the art.

This specific combination of a tea products, vitamin C and specific types and ratios of polysaccharide binders, together with their beneficial use in delivering vitamin C could not have been realised from the disclosures found in the art.

### Summary of the invention

In a first aspect, the present invention provides a beverage composition comprising;
a) vitamin C;
b) a first polysaccharide comprising maltodextrin;
c) a second polysaccharide comprising gum arabic and/or xanthan gum; and,
d) a beverage product,
wherein the mass ratio of first polysaccharide to second polysaccharide is between 2:1 to 1:2.

In another aspect, the present invention provides a process for preparing a beverage composition comprising the steps of:
a) preparing a coating solution by adding, and optionally mixing, vitamin C, a first polysaccharide comprising maltodextrin and a second polysaccharide comprising gum arabic and/or xanthan gum with water;
b) adding the coating solution of step a) to a beverage product and mixing for a duration of between 1 and 30 minutes; and
c) drying the mixture of step b) at a temperature of between 90 °C and 160 °C for a duration of between 2 and 60 minutes.

This and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The disclosure of the invention as found herein is to be considered to cover all embodiments as found in the claims as being multiply dependent upon each other irrespective of the fact that claims may be found without multiple dependency or redundancy.

In a first aspect, the present invention provides a beverage composition comprising;
a) vitamin C;
b) a first polysaccharide comprising maltodextrin;
c) a second polysaccharide comprising gum arabic and/or xanthan gum; and,
d) a beverage product,
wherein the mass ratio of first polysaccharide to second polysaccharide is between 2:1 to 1:2.

### Vitamin C

It will be appreciated that vitamin C refers to ascorbic acid and derivatives thereof.

In certain embodiments, vitamin C is selected from L-ascorbic acid, ascorbyl glucoside, magnesium ascorbyl phosphate, ethyl ascorbic acid, ascorbyl phosphate, ascorbyl palmitate and an ascorbate (e.g. sodium or potassium ascorbate). Preferably, vitamin C is selected from L-ascorbic acid, ascorbyl glucoside, magnesium ascorbyl phosphate and an ascorbate (e.g. sodium or potassium ascorbate). Most preferably, vitamin C is L-ascorbic acid.

In certain embodiments, the vitamin C is not an ascorbate (e.g. sodium or potassium ascorbate).

The amount of vitamin C (e.g. L-ascorbic acid) used in the beverage composition of the present invention is preferably in the range of 0.5 to 40%, more preferably 1 to 30%, further preferably 2 to 30%, still more preferably, 5 to 25%, yet more preferably 10 to 25% and most preferably 10 to 20% by weight of the composition.

### Polysaccharides

The beverage composition of the present invention also comprises two polysaccharides. The first polysaccharide comprises maltodextrin. Preferably, the first polysaccharide is maltodextrin.

Maltodextrin is a well-known food additive. It is a flavourless substance. It is generally produced from vegetable starch by hydrolysis. The starch is preferably corn or wheat.

The amount of maltodextrin used in the beverage composition of the present invention is preferably in the range of 0.1 to 15%, more preferably 0.2 to 10%, further preferably 0.5 to 8%, still more preferably, 0.5 to 6%, yet more preferably 1 to 5% and most preferably 1 to 4% by weight of the composition.

Preferably, the mass (weight) ratio of vitamin C to maltodextrin in the beverage composition is between 20:1 and 4:1. More preferably, the mass (weight) ratio of vitamin C to maltodextrin in the beverage composition is between 20:1 and 6:1. Even more preferably, the mass (weight) ratio of vitamin C to maltodextrin in the beverage composition is between 20:1 and 10:1. Most preferably, the mass (weight) ratio of vitamin C to maltodextrin in the beverage composition is between 15:1 and 10:1.

One or more other polysaccharides may also be included together with maltodextrin, as an example of the first polysaccharide. Non-limiting examples of other polysaccharides include starch and modified starch (e.g. OSA starch).

It will be appreciated that the term modified starch will be understood as being any naturally occurring starch that is modified by physical, chemical or enzymatic processes. Preferably, the modified starch is acetylated starch, dextrin or cross-linked starch.

The amount of modified starch used in the composition of the present invention is preferably in the range of 0.1 to 15%, more preferably 0.2 to 10%, further preferably 0.5 to 8%, still more preferably, 0.5 to 6%, yet more preferably 1 to 5% and most preferably 1 to 4% by weight of the composition.

The beverage composition of the present invention also comprises a second polysaccharide. The second polysaccharide comprises gum arabic and/or xanthan gum. Preferably, the second polysaccharide is selected from gum arabic or xanthan gum. Most preferably, the second polysaccharide is gum arabic. Gum arabic is also commonly known as gum acacia. It is an edible water-soluble gum widely used in food industries as stabilizer and/or thickener.

The amount of gum arabic and/or xanthan gum in the beverage composition of the present invention preferably is in the range of 0.1 to 15%, more preferably 0.2 to 10%, further preferably 0.5 to 8%, still more preferably, 0.5 to 6%, yet more preferably 1 to 5% and most preferably 1 to 4% by weight of the composition.

Preferably, the mass (weight) ratio of the first polysaccharide (e.g. maltodextrin) to the second polysaccharide (e.g. gum arabic) is from 2:1 to 1:2, more preferably 1.5:1 to 1:1.5 and most preferably 1:1.

The combined amount of the first polysaccharide (e.g. maltodextrin) and the second polysaccharide (e.g. gum arabic) is between 0.1 and 20 % by weight of the composition. Preferably, the combined amount of the first polysaccharide (e.g. maltodextrin) and the second polysaccharide (e.g. gum arabic) is between 0.5 and 15 % by weight of the composition, more preferably between 1 and 10 % by weight of the composition, still more preferably between 1 and 8 % by weight of the composition, and most preferably between 2 and 6 % by weight of the composition.

### The beverage product

It will be appreciated that the beverage product may be any beverage precursor to which water (e.g. boiling water) may be added to prepare a beverage infusion. Non-limiting examples of the beverage product are tea leaf products, herbal tea products, coffee beans, ground coffee powder, cocoa products, instant tea products, instant coffee products and the like.

The amount of beverage product (e.g. leaf tea product) in the composition is preferably in the range of 75 to 99%, more preferably 80 to 98.5%, even more preferably 85 to 98.5%, yet more preferably 87 to 98.5%, still more preferably 90 to 98.5% and most preferably 92 to 98.5% by weight of the composition.

In certain embodiments, the composition of the present invention comprises a leaf tea product. A leaf tea product preferably means a tea product which is obtained after the tea manufacturing processes and comprise less than 10%, preferably less than 7% and most preferably less than 5% moisture by weight of the leaf tea product.

The leaf tea product may preferably be selected from a black tea product, a green tea product, an oolong tea product, a white tea product or blends thereof.

Black tea generally refers to fermented tea and produced by processing fresh tea leaves. Fresh tea leaf refers to tea leaf, buds and/or stem that have never been dried to a water content of less than 30% by weight, and usually have moisture content in the range 60 to 90%. Black tea has different characteristics to green tea. Black tea is more astringent in taste and less bitter than green tea. The redness of black tea liquor is also significantly higher than that of green tea. Black tea also contains higher level of theaflavins.

In the process of black tea, fermentation refers to the oxidative and hydrolytic process that tea undergoes when certain endogenous enzymes and substrates are brought together, e.g. by mechanical disruption of the cells by maceration of the leaves. During this process, colourless catechins in the leaves are converted to a complex mixture of yellow and orange to dark-brown polyphenolic substances.

Green tea refers to substantially unfermented tea. Green tea has different characteristics than black tea. Green tea liquor is light in colour unlike black tea. Green tea also enriched with catechins and low or no amount of theaflavins.

Oolong tea refers to semi-fermented tea.

The preferred leaf tea product for the purpose of the present invention is either black tea or green tea, the most preferred is black tea.

In certain embodiments, the beverage product is a herbal (tea) product.

For the purpose of the present invention, the term herbal (tea) product may preferably be any (tea) product produced from a herbal plant material which is fit for human consumption. The herbal plant material may preferably comprise the leaves of the plant, roots of the plants, flowers of the plant, fruits of the plants or any other parts of the plants. Preferably, the herbal plant material refers to the leaves of the plant. It will be appreciated that the term herbal (tea) product also encompasses the leaves, stems, roots, flowers, and fruits of shrubs.

Preferably, the herbal (tea) product comprises medicinal plants which preferably means plants that have beneficial properties associated with human health.

In certain preferred embodiments, the herbal (tea) product is selected from a rooibos (tea) product, a hibiscus (tea) product, a chamomile (tea) product, a rosehip (tea) product, a mint (tea) product, a lemon verbena (tea) product, a chicory (tea) product, an orange (tea) product, a yerba mate (tea) product and combinations thereof.

Preferably, the herbal (tea) product is selected from a rooibos (tea) product, a hibiscus (tea) product, a chamomile (tea) product, a lemon verbena (tea) product and combinations thereof. More preferably, the herbal (tea) product is selected from a rooibos (tea) product, a hibiscus (tea) product, a chamomile (tea) product and combinations thereof. Still more preferably, herbal (tea) product is selected from a rooibos (tea) product or a hibiscus (tea) product. Most preferably, the herbal (tea) product is a rooibos (tea) product.

It will be understood that mint (tea) products may include, for example, peppermint (tea) products, spearmint (tea) products, apple mint (tea) products, Moroccan mint (tea) products and the like.

It will also be appreciated that in some embodiments, the beverage product is an instant beverage, such as instant coffee and tea powders. Instant beverage products are usually produced from aqueous extracts made in the traditional way. These aqueous extracts may then be subjected to a clarification step (such as "de-creaming" used in the manufacture of tea powders) and/or concentrated under vacuum or by reverse osmosis. In the case of granular coffee production, the aqueous extract may also be foamed at this point. The resulting extract is then dried by either spray-drying or freeze-drying. If freeze-drying is used, the extract is usually frozen as a thin layer on a freezing belt before being ground in the frozen state. The resulting granules are usually poured into trays and freeze-dried at low pressure.

The instant beverage product is thus preferably in the form of a powder or granule produced by extracting the beverage product (e.g. tea leaf, coffee etc.) with a solvent (e.g. water), optionally clarifying the extract, and drying it (e.g. spray-drying or freeze-drying) to obtain a powder or granules.

The instant beverage product is thus preferably in the form of a powder or granule, preferably a powder. The instant beverage product may therefore be a powder or granule with an average particle size of 1200 µm or less, preferably 1100 µm or less, and most preferably 1000 µm or less.

The instant beverage product is preferably soluble in water with temperature in the range from 4°C to 100°C, more preferably from 6° C to 90°C and most preferably from 10°C to 80°C.

Non-limiting examples of possible instant beverage products include an instant tea product, an instant herbal product, an instant coffee product and an instant cocoa product.

### Other additives

In certain embodiments, the beverage composition may comprise one or more buffering agents. It will be understood that a buffering agent is any agent (compound) which may be added to the composition to maintain the pH of the beverage infusion within a specific range. Preferably, the buffering agent is a compound which can maintain the pH of the beverage infusion within the range of 4 to 6, more preferably within a range of 4.5 to 6, still more preferably within a range of 4.8 to 5.8, yet more preferably within a range of 5 to 5.6, and most preferably within a range of 5 to 5.3.

A non-limiting list of suitable buffering agents include citrates, carbonates, bicarbonates, phosphates, borates, glycine and combinations thereof. In certain embodiments, the buffering agent is a basic form of the acid included in the composition of the invention. For example, when the acid is citric acid, the buffering agent may be a citrate (e.g. sodium or potassium citrate).

In certain embodiments, the buffering agent is selected from a citrate, a carbonate a bicarbonate, a phosphate or combinations thereof. Suitably, the carbonate is a potassium or sodium carbonate. Suitably, the bicarbonate is a potassium or sodium bicarbonate. Suitably, the citrate is a sodium or potassium citrate.

In certain preferred embodiments, the buffering agent is sodium citrate.

The buffering agent may be present in any suitable amount. In some embodiments, the buffering agent is present in an amount of between 0.1 and 5% by weight of the composition. Preferably, the buffering agent is present in an amount of between 0.5 and 4% by weight of the composition, more preferably between 0.5 and 3% by weight of the composition.

In some embodiments, the beverage composition may also comprise sugar and/or one or more sweeteners. A non-limiting list of examples of possible sweeteners include acesulfame K, aspartame, saccharin, sorbitol, stevia, sucralose and xylitol.

It will also be understood that the beverage composition of the present invention may comprise one or more additional agents. For example, the beverage composition may comprise one or more nutrients, flavourings, metals and minerals, bulking agents, anti-caking agents (e.g. silicon dioxide), cocoa extract etc.

A non-limiting list of possible flavourings include vanilla, fruit (e.g. strawberry, lemon, berry), ginger, cardamom, all spices, jasmine and tea essence (e.g. earl grey, black tea).

A non-limiting list of possible nutrients include other vitamins (e.g. vitamin B and vitamin D), minerals (e.g. zinc, calcium, sodium) and essential fatty-acids (e.g. omega-3 and omega-6). Preferably, the one or more additional nutrients is selected from vitamins (e.g. vitamin C and vitamin D) and metals and minerals (e.g. zinc, iron, calcium, sodium etc.), and most preferably vitamin D, vitamin B12, iron and/or zinc.

A non-limiting list of possible bulking agents include starch, carboxymethyl cellulose and sugar (e.g. dextrose).

It will be appreciated that the above additional agents may be added in any suitable amount. Preferably, the one or more additional agents are each independently added in an amount of between 0.01 and 5 % by weight of the composition, preferably between 0.05 and 4 % by weight of the composition, more preferably between 0.1 and 3 % by weight of the composition, and most preferably between 0.5 and 2 % by weight of the composition.

### Process of the invention

The present invention also provides a process for preparing a beverage composition comprising the steps of:
a) preparing a coating solution by adding, and optionally mixing, vitamin C, a first polysaccharide comprising maltodextrin and a second polysaccharide comprising gum arabic and/or xanthan gum with water;
b) adding the coating solution of step a) to a beverage product and mixing for a duration of between 1 and 30 minutes;
c) drying the mixture of step b) at a temperature of between 90 °C and 160 °C for a duration of between 2 and 60 minutes.

### Step a)

It will be understood that the vitamin C, the first polysaccharide and the second polysaccharide may be able of those described herein above in relation to the first aspect of the invention. For example, the vitamin C is preferably L-ascorbic acid, the first polysaccharide is preferably maltodextrin and the second polysaccharide is preferably gum arabic.

It will also be understood that the coating solution prepared in step a) may be prepared using any conventional technique. Typically, this involves dissolving (optionally with agitation or mixing) a predetermined amount of vitamin C (e.g. L-ascorbic acid), the first polysaccharide (e.g. maltodextrin) and the second polysaccharide (e.g. gum arabic) in water at ambient conditions (e.g. 25 °C and 1 atmosphere).

The coating solution prepared in step a) may have any suitable vitamin C (e.g. L-ascorbic acid) concentration, dependent upon the intended application of the coating solution. Preferably, the vitamin C (e.g. L-ascorbic acid) concentration of the coating solution is between 2 and 40 % w/v, more preferably between 2 and 35 % w/v, still more preferably between 5 and 30 % w/v, even more preferably between 10 and 30 % w/v, and most preferably between 15 and 25 % w/v.

In certain embodiments, the weight (mass) ratio of vitamin C to water used in the coating solution of step a) is 1:2 or greater, preferably 1:3 or greater, more preferably 1:35 or greater, and most preferably 1:4 or greater.

In certain embodiments, the weight (mass) ratio of vitamin C to water used in the coating solution of step a) is between 1:2 and 2.0, preferably between 1:2 and 1:8, more preferably between 1:3 and 1:6, still more preferably between 1.3 and 1.6, and most preferably between 1.4 and 1.5.

Preferably, the combined concentration of the first polysaccharide and the second polysaccharide in the coating solution of step a) is between 1 and 20 % w/v, preferably, 1 and 15 % w/v, more preferably between 2 and 10 % w/v and most preferably between 2 and 8 % w/v.

### Step b)

It will be appreciated that the beverage product of step b) may be any one of the beverage products described hereinabove. Preferably, the beverage product is a leaf tea product (e.g. a black tea leaf product).

Following the addition of the coating solution of step a) to a beverage product, the materials are mixed. Any suitable method of mixing may be used in this step, such as mechanical stirring or agitation. It will be appreciated that both addition and mixing may be conducted at any suitable temperature. Preferably, the temperature of addition and mixing is between 10 °C and 50 °C, more preferably between 15 °C and 40 °C and most preferably between 20 °C and 30 °C (e.g. 25 °C).

If any other ingredients are added to the beverage composition (e.g. one or more other vitamins, nutrients, pH regulating agent etc.), these are also added during step b).

The duration of the mixing may be varied between 1 and 30 minutes. Preferably, the mixing of step b) is conducted for a duration of between 2 and 30 minutes, more preferably between 5 and 25 minutes, even more preferably between 5 and 20 minutes and most preferably between 8 and 15 minutes.

### Step c)

Step c) comprises drying the mixture of step b) at a temperature of between 90 °C and 160 °C for a duration of between 2 and 60 minutes.

It will be appreciated that any suitable drying step may be used.

For example, the drying step may be carried out using a fluidised bed drier, freeze dryer, microwave dryer or vacuum dryer.

Preferably, the drying step may be carried out using a fluidised bed drier. More preferably, the drying step may be carried out using a fluidised bed drier operated at between 90 °C and 150 °C for between 2 to 45 minutes. More preferably, the drying step may be carried out using a fluidised bed drier operated at between 90 °C and 120 °C for between 2 to 30 minutes. Most preferably, the drying step may be carried out using a fluidised bed drier operated at between 100 °C and 120 °C for between 5 to 25 minutes (e.g. 20 minutes).

It will be appreciated that the drying step (step c) is preferably conducted to achieve a moisture content of the beverage composition of less than 20 % moisture by weight of the beverage composition, preferably less than 10%, more preferably less than 7% and most preferably less than 5% moisture by weight of the beverage composition.

The process may further include a final step of blending the vitamin C coated beverage product with a non-vitamin C coated beverage product of the same type. Preferably, the blend comprises between 1 and 50 % of the vitamin C coated beverage product (e.g. leaf tea product) by weight of the beverage product (e.g. leaf tea product). More preferably, the blend comprises between 1 and 40 % of the vitamin C coated beverage product (e.g. leaf tea product) by weight of the beverage product (e.g. leaf tea product). Still more preferably, the blend comprises between 1 and 30 % of vitamin C coated beverage product (e.g. leaf tea product) by weight of the beverage product (e.g. leaf tea product). Even more preferably, the blend comprises between 1 and 20 % of the vitamin C coated beverage product (e.g. leaf tea product) by weight of the beverage product (e.g. leaf tea product). Yet more preferably, the blend comprises between 1 and 10 % of the vitamin C coated beverage product (e.g. leaf tea product) by weight of the beverage product (e.g. leaf tea product). Most preferably, the blend comprises between 2 and 8 % of the vitamin C coated beverage product (e.g. leaf tea product) by weight of the beverage product (e.g. leaf tea product).

The present invention will now be demonstrated by way of non-limiting examples below. The examples are for illustration only and do not limit the scope of the invention in any manner.

### EXAMPLES

### Materials used

Black tea leaf was obtained from ekaterra tea Kenya Ltd.
L-ascorbic acid was obtained from Merck.
Gum acacia was obtained from Merck.
Maltodextrin was obtained from Merck.
OSA starch was obtained from Cargill.

### Example C1

30 g of L-ascorbic acid (solubility: 33 g / 100 g water at 25 °C) was mixed in 100 g of distilled water (at 25 °C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes. Then, 1 g the vitamin C coated black tea was blended with 1 g of regular fannings back tea (obtained from Kenya). The blend was then used to prepare a tea infusion as mentioned in the infusion preparation protocol described below.

### Example 1

30 g of L-ascorbic acid (solubility: 33 g / 100 g water at 25 °C) and 5 g of gum acacia were mixed in 100 g of distilled water (at 25 °C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes to get final tea moisture of 3 to 4%. Total vitamin c was analysed as per the protocol mentioned in the below mentioned section.

### Example 2

30 g of L-ascorbic acid (solubility: 33 g / 100 g water at 25 °C) and 5 g of maltodextrin were mixed in 100 g of distilled water (at 25 °C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 20 minutes. Then, this mixture was dried using fluidised bed drier at 110 °C for 10 minutes to get final tea moisture of 3 to 4%. Total vitamin c was analysed as per the protocol mentioned in the below mentioned section.

### Example 3

30 g of L-ascorbic acid (solubility: 33 g / 100 g water at 25 °C), 2.5 g of gum acacia and 2.5 g of maltodextrin were mixed in 100 g of distilled water (at 25°C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes to get final tea moisture of 3 to 4%. Total vitamin c was analysed as per the protocol mentioned in the below mentioned section.

### Example 4

30 g of L-ascorbic acid (solubility: 33 g / 100 g water at 25 °C), 1.65 g of gum acacia and 3.3 g of maltodextrin were mixed in 100 g of distilled water (at 25°C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes to get final tea moisture of 3 to 4%. Total vitamin c was analysed as per the protocol mentioned in the below mentioned section.

### Example 5

30 g of L-ascorbic acid (solubility: 33 g / 100 g water at 25 °C), 3.3 g of gum acacia and 1.65 g of maltodextrin were mixed in 100 g of distilled water (at 25°C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes to get final tea moisture of 3 to 4%. Total vitamin c was analysed as per the protocol mentioned in the below mentioned section.

### Example 6

30 g of L-ascorbic acid (solubility: 33 g / 100 g water at 25 °C), 3 g of gum acacia and 2 g of maltodextrin were mixed in 100 g of distilled water (at 25°C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes to get final tea moisture of 3 to 4%. Total vitamin c was analysed as per the protocol mentioned in the below mentioned section.

### Example 7

30 g of L-ascorbic acid (solubility: 33 g / 100 g water at 25 °C), 2 g of gum acacia and 3 g of maltodextrin were mixed in 100 g of distilled water (at 25°C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes to get final tea moisture of 3 to 4%. Total vitamin c was analysed as per the protocol mentioned in the below mentioned section.

After the above tea products were prepared, the infusions were produced using the following protocol.

### Infusion preparation procedure

2 g of the herbal tea product (as prepared above) was taken in a mug and 200 mL of boiled deionised water was poured in it. After 2 minutes of brewing, the content was filtered using a fine mesh tea strainer and the filtered tea was taken for further analysis.

### Extraction of total Vitamin C from coated teas

Around 1g ± 0.2g of sample was taken into a centrifuge tube and 25 mL of 3% metaphosphoric solution was added and vortexed to ensure complete dispersion and then it was sonicated for 15 minutes at 25 Deg C. The sample tube was allowed to stand for 5 minutes to settle down and then filtered the settled solution through 0.22 µ PTFE filter. Around 1 mL of filtrate was transferred to HPLC vial and Injected into HPLC.

### Measurement of Vitamin C concentration using HPLC

The amount of vitamin C in the final tea beverages were measured using a HPLC method as per the below mentioned conditions.

| **Conditions** | **Parameters** |
|---|---|
| Flow rate: | 0.8ml/min |
| Column: | Reverse phase C18, 250x4.6mm,5um |
| Mobile phase: | 0.3 mM potassium dihydrogen phosphate in 0.35% ortho phosphoric acid |
| Injection vol: | 20 µl (micro litre) |
| Oven temp: | 30 °C |
| Detector wavelength | 248 nm |
| Run time: | 10 minutes |
| Retention time: | 5.0 minutes |

### Accelerated storage procedure.

20 g of the vitamin C coated tea samples were taken in a ceramic petri plate and spread as thin layer. The plate was then stored in hot and humid chamber maintained at 35 °C & 90% relative humidity for 8 days.

### Measurement of infusion colour

The a* and b* values were then measured using the following procedure:
Colour (CIE L*a*b* values) was measured using a Hunter lab Ultrascan XE (Model-USXE/UNI version 3.4, Hunterlab Associates Laboratories Inc. Virginia). A halogen cycle lamp was used as the light source. The illuminant used was D65 and the measurements were made at 10°- Observer angle. Measurements were made using a quartz cuvette of 10 mm path length. Tea infusions as prepared above was filled up to the brim in the cuvette and placed in the instrument for colour measurement. The instrument was calibrated using a standard white tile (Hunterlab Duffuse/8°, mode-RSEX, Port-1" and area- large) in accordance with the instructions provided in the instruction manual. The L*a*b* values were measured at room temperature (25°C).

Colour can be expressed using the coordinates of the CIE 1976 L*a*b* colour space. The CIE L*a*b* colour space is organised in a cubic form. The L* axis runs from top to bottom. The maximum value for L* is 100 (which represents a perfect reflecting diffuser), and the minimum value for L* is 0 (which represents black). The a* and b* axes have no specific numerical limits. The a* axis extends from green (-a*) to red (+a*), and the b* axis from blue (-b*) to yellow (+b*). CIE L*a*b* values can be measured by colourimetry according to the joint ISO/CIE standard (ISO 11664-4:2008(CE); CIE S 014-4/E:2007).

The colour of the black leaf tea product can be measured using CIE L*a*b* colour space. This measurement can be performed directly on the leaf tea by colourimetry (according to the joint ISO/CIE standard ISO 11664-4:2008(CE); CIE S 014-4/E:2007).

The a* and b* axes have no specific numerical limits. Positive a* is red and negative a* is green. The higher the b* value, the brighter the infusion appears.

The results are summarized below in Table 1.

**Table 1 - Vitamin C retention in black tea (mg/g per dry tea wt) upon storage.**

| **Example** | **Binder (5 w/w %)** | **Ratio of Binders** | **Total Vitamin C Retention (mg/g) DWT*** | | **% Vitamin C Remaining (Total)** | **Percentage Improvement in Vitamin C Retention (%)** |
|---|---|---|---|---|---|---|
| | | | **T = 0 Days** | **T = 8 Days** | | |
| C1 | - | - | 237 | 91 | 38 | - |
| 1 | Gum Arabic | - | 227 | 104 | 46 | 21 |
| 2 | Maltodextrin | - | 232 | 102 | 44 | 16 |
| 3 | Gum Arabic and Maltodextrin | 1:1 | 232 | 129 | 56 | 47 |
| 4 | Gum Arabic and Maltodextrin | 1:2 | 232 | 123 | 53 | 39 |
| 5 | Gum Arabic and Maltodextrin | 2:1 | 225 | 119 | 53 | 39 |
| 6 | Gum Arabic and Maltodextrin | 3:2 | 227 | 107 | 47 | 24 |
| 7 | Gum Arabic and Maltodextrin | 2:3 | 240 | 114 | 48 | 26 |

| | | | | | | |
|---|---|---|---|---|---|---|
| **DWT* = *Dry Weight of Tea* | | | | | | |

From the data presented above, it is evident the most significant improvement in vitamin C retention on the beverage product (e.g. black tea leaf) is achieved upon using a beverage composition comprising vitamin C *and* both polysaccharide binders gum arabic and maltodextrin in a specific mass ratio of between 1:2 and 2:1 (see Examples 3 to 5). Upon using a composition according to the present invention, the stability of the vitamin C coated beverage product is significantly increased (40% or greater) compared to beverages coated only with vitamin C, and further significantly improved compared to beverages utilising just one (Examples 1 and 2) or different ratios of (Examples 6 and 7) of the polysaccharide binders.

### Example 8

30 g of L-ascorbic acid (solubility: 33 g / 100 g water at 25 °C) and 10 g of OSA (Octenyl succinic anhydride) starch were mixed in 100 g of distilled water (at 25°C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes to get final tea moisture of 3 to 4%. Total vitamin c was analysed as per the protocol mentioned in the below mentioned section.

### Example 9

30 g of L-ascorbic acid (solubility: 33 g / 100 g water at 25 °C), 5 g of gum acacia and 5 g of maltodextrin were mixed in 100 g of distilled water (at 25°C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes to get final tea moisture of 3 to 4%. Total vitamin c was analysed as per the protocol mentioned in the below mentioned section.

**Table 2 - Vitamin C retention in black tea (mg/g per dry tea wt) upon storage.**

| **Example** | **Binder (10 w/w %)** | **Ratio of Binders** | **Total Vitamin C Retention (mg/g) DWT*** | | **% Vitamin C Remaining (total)** | **Percentage Improvement in Vitamin C Retention (%)** |
|---|---|---|---|---|---|---|
| | | | **T = 0 Days** | **T = 7 Days** | | |
| Regular black tea | - | - | 193 | 83 | 43 | - |
| 8 | Modified Starch | - | 195 | 86 | 44 | 1 |
| 9 | Gum Arabic and Maltodextrin | 1:1 | 192 | 99 | 52 | 21 |

| | | | | | | |
|---|---|---|---|---|---|---|
| **DWT* = *Dry Weight of Tea* | | | | | | |

The data above data, it can again be seen that the stability of vitamin C coated beverage products utilising maltodextrin and gum arabic in a specific ratio (e.g. 1:1) is significantly increased compared to beverages coated with other types of polysaccharide binders.

### Ratio of water used to prepare vitamin C fortified teas.

### Example 10

30 g of L-ascorbic acid (solubility: 33 g / 100 g water at 25 °C), 2.5 g of gum acacia and 2.5 g of maltodextrin were mixed in 18 g of distilled water (at 25 °C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes. Then, this mixture was dried using fluidised bed drier at 110 °C for 20 minutes to get final tea moisture of 3 to 4%. Total vitamin c was analysed as per the protocol mentioned in the below mentioned section.

### Example 11

30 g of L-ascorbic acid (solubility: 33 g / 100 g water at 25 °C), 2.5 g of gum acacia and 2.5 g of maltodextrin were mixed in 36 g of distilled water (at 25 °C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes. Then, this mixture was dried using fluidised bed drier at 110 °C for 20 minutes to get final tea moisture of 3 to 4%. Total vitamin c was analysed as per the protocol mentioned in the below mentioned section.

### Example 12

30 g of L-ascorbic acid (solubility: 33 g / 100 g water at 25 °C), 2.5 g of gum acacia and 2.5 g of maltodextrin were mixed in 56 g of distilled water (at 25 °C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes. Then, this mixture was dried using fluidised bed drier at 110 °C for 20 minutes to get final tea moisture of 3 to 4%. Total vitamin c was analysed as per the protocol mentioned in the below mentioned section.

### Example 13

30 g of L-ascorbic acid (solubility: 33 g / 100 g water at 25 °C), 2.5 g of gum acacia and 2.5 g of maltodextrin were mixed in 100 g of distilled water (at 25 °C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes. Then, this mixture was dried using fluidised bed drier at 110 °C for 20 minutes to get final tea moisture of 3 to 4%. Total vitamin c was analysed as per the protocol mentioned in the below mentioned section.

### Example 14

30 g of L-ascorbic acid (solubility: 33 g / 100 g water at 25 °C), 2.5 g of gum acacia and 2.5 g of maltodextrin were mixed in 138 g of distilled water (at 25 °C) to prepare a coating solution. After through mixing, the pH of the coating solution was measured as 3. 100 g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes to get final tea moisture of 3 to 4%. Total vitamin c was analysed as per the protocol mentioned in the below mentioned section.

**Table 3: Leaf appearance of Vitamin C coated black teas.**

| **Example** | **Ratio of Vitamin C: Water used for coating** | **Leaf appearance of coated tea measured through L*(Lightness)** |
|---|---|---|
| Standard black tea | - | 14.0 |
| 10 | 1:0.6 | 20.0 |
| 11 | 1:1.2 | 18.0 |
| 12 | 1:2.0 | 17.0 |
| 13 | 1:3.3 | 15.0 |
| 14 | 1:4.6 | 14.0 |

From the data presented above, it can be seen that excellent visual appearance (Darker) of the beverage product (e.g. colour of black leaf tea) can be maintained using the composition of the invention.

### Example A1: Black Tea + Vitamin C+ Binders

30 g of L-ascorbic acid (solubility: 33 g / 100 g water at 25°C), 2.5 g of gum acacia and 2.5 g of maltodextrin were mixed in 100 g of distilled water (at 25 °C) to prepare a coating solution. After through mixing the pH of the coating solution was measured as 3. 100g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes. Then, 2 g the vitamin C coated black tea (obtained from Kenya) was then used to prepare a tea infusion as mentioned in the infusion preparation protocol described above.

### Example A2: Black Tea + Vitamin C+ Binders

30 g of L-ascorbic acid (solubility: 33 g / 100 g water at 25°C), 2 g of gum acacia and 3 g of maltodextrin were mixed in 100 g of distilled water (at 25 °C) to prepare a coating solution. After through mixing the pH of the coating solution was measured as 3. 100g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes. Then, 2 g the vitamin C coated black tea (obtained from Kenya) was then used to prepare a tea infusion as mentioned in the infusion preparation protocol described above.

### Example A: Black Tea + Vitamin C

30 g of L-ascorbic acid (solubility: 33 g / 100 g water at 25°C) was mixed in 100 g of distilled water (at 25 °C) to prepare a coating solution. After through mixing the pH of the coating solution was measured as 3. 100g of fannings grade black tea (obtained from Kenya) was taken in a bowl and the coating solution was sprinkled on the black tea and mixed thoroughly in a Hobart blender for 10 minutes. Then, this mixture was dried using fluidised bed drier at 110 °C for 20 minutes. Then, 2 g the vitamin C coated black tea (obtained from Kenya) was then used to prepare a tea infusion as mentioned in the infusion preparation protocol described above.

**Table 4 - Table showing levels of Vitamin C in the tea leaf and infusion cup.**

| **Type** | **Total Vitamin C in the leaf tea tea (mg/2 g tea)** | **Delivered Vitamin C into the infusion (mg/2g brew)** | **% Delivery of Vitamin C to infusion** |
|---|---|---|---|
| A1 | 474 | 443 | 94 |
| A2 | 452 | 444 | 98 |
| A | 448 | 438 | 97 |

From the above table it is evident that the vitamin C fortified beverage compositions of the invention achieve excellent delivery of the vitamin C to the end cup.

Therefore, from the description of the invention is it clear that by way of present invention it is now possible to provide a vitamin C fortified beverage compositions which are stable, do not impact on the visual appearance of the beverage product and beneficially deliver a substantial amount of vitamin C to the end infusion liquor.

## Claims

1. A beverage composition comprising.
a) vitamin C or a derivative thereof;
b) a first polysaccharide comprising maltodextrin.
c) a second polysaccharide comprising gum arabic and/or xanthan gum; and,
d) a beverage product,
wherein the mass ratio of first polysaccharide to second polysaccharide is between 2:1 to 1:2.

2. A composition according to claim 1 wherein the vitamin C is L-ascorbic acid.

3. A composition according to claim 1 wherein the ratio of first polysaccharide to second polysaccharide is 1:1.

4. The composition according to any one of the preceding claims wherein the first polysaccharide is maltodextrin.

5. The composition according to any one of the preceding claims wherein the second polysaccharide is gum arabic.

6. A composition according to any one of the preceding claims wherein the first polysaccharide and second polysaccharide are present in a combined amount of between 0.5 and 15% by weight of the composition, preferably between 1 and 8 % by weight of the composition.

7. The composition according to any preceding claim wherein the beverage product is a leaf tea product.

8. The composition according to claim 7 wherein the leaf tea product is selected from a black tea product, a green tea product, an oolong tea product, a white tea product or blends thereof.

9. The composition according to claim 8 wherein the leaf tea product is a black tea product.

10. The composition according to claim 7 wherein the leaf tea product is a herbal tea product.

11. The composition according to claim 10, wherein the herbal tea product is selected from a rooibos tea product, a hibiscus tea product, a chamomile tea product or blends thereof.

12. The composition according to any one of the preceding claims wherein the amount of beverage product in the composition is in the range of 85 to 98.5% by weight of the composition.

13. The composition as claimed in any one of the preceding claims wherein the composition comprises one or more additional agents, optionally selected from nutrients, flavourings, metals and minerals, bulking agents, anti-caking agents (e.g. silicon dioxide) and cocoa extract.

14. A process for preparing a tea composition comprising the steps of:
a) preparing an aqueous solution of vitamin C, a first polysaccharide comprising maltodextrin and a second polysaccharide comprising gum arabic and/or xanthan gum to prepare a coating solution;
b) adding the coating solution of step a) to a beverage product and mixing for a duration of between 1 and 30 minutes;
c) drying the mixture of step b) at a temperature of between 90 °C and 160 °C for a duration of between 2 and 60 minutes.

15. A process according to claim 15, wherein the mass ratio of vitamin C to water used in step a) is 1:3 or greater.
